# EUROPEAN PATENT APPLICATION

(11) **EP 1 890 061 A1**
(43) Date of publication of application: **20.02.2008**
(21) Application number: 06746779.5
(22) Date of filing: 24.05.2006
(51) Int. Cl.: F16J 15/447, F16C 33/78, F16C 33/80, F16J 15/32

(54) **SEALING DEVICE**

(30) Priority: 07.06.2005 JP 2005166729; 07.06.2005 JP 2005166730
(71) Applicant: NOK Corporation, Minato-ku Tokyo 105-8585 (JP)
(72) Inventor: KANZAKI, Go c/o NOK CORPORATION 8, Aza Tsuzukibori, Fukushima 9601102 (JP); MATSUI, Hiroki NOK CORPORATION 8, Aza Tsuzukibori, Fukushima-shi, Fukushima 9601102 (JP); KOBAYASHI, Naoto NOK CORPORATION 8 Aza Tsuzukibori, Fukushima 9601102 (JP); YAMANAKA, Satoshi NOK CORP. 8 Aza Tsuzukibori, Fukushima-shi, Fukushima 9601102 (JP)
(74) Representative: TBK-Patent
(86) International application number: PCT/JP2006/310296
(87) International publication number: WO 2006/132083

(57) **Abstract**

A sealing device (1) capable of further increasing sealing performance by a labyrinth to effectively suppress the entry of dust such as slurry, comprising an inner peripheral side sealing member (2) fitted to an inner peripheral side mounting member as one of two members rotating relative to each other and an outer peripheral side sealing member (3) fitted to the outer peripheral side mounting member as the other. An outer peripheral tube part (4c) is formed on the outer peripheral portion of the metal ring (4) of the inner peripheral side sealing member (2), and a series of long labyrinth spaces (8), (9), and (10) are formed between the outer peripheral surface of the outer peripheral tube part (4c) and the outer peripheral side sealing member (3), between the tip face of the outer peripheral tube part (4c) and the outer peripheral side sealing member (3), and between the inner peripheral surface of the outer peripheral tube part (4c) and the outer peripheral side sealing member (3).

## Description

### BACKGROUND OF THE INVENTION

### Field of the Invention

The present invention relates to a sealing device in accordance with a sealing technique. The sealing device in accordance with the present invention is used, for example, as a hub bearing seal in an automotive associated field, or used in a general purpose machine or the like.

### Description of the Conventional Art

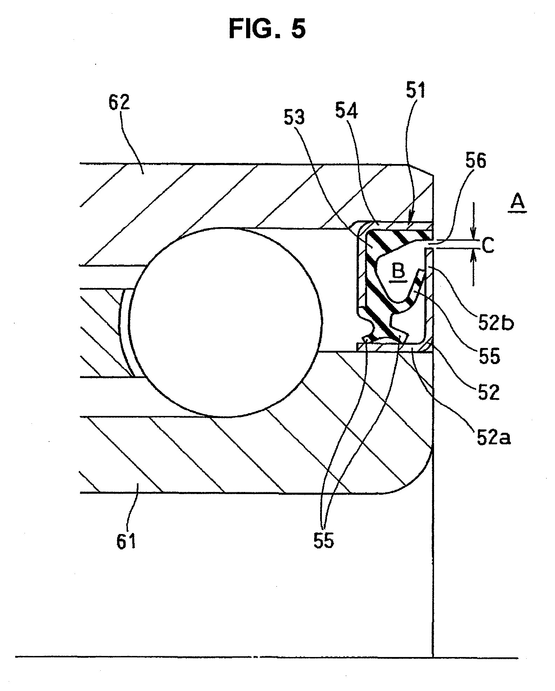

In conventional, there has been known a sealing device 51 as shown in Fig. 5, and the sealing device 51 is structured by a combination of a slinger member 52 attached to an inner peripheral side attaching member (for example, an inner ring) 61 corresponding to one of relatively rotating two members (for example, inner and outer rings of a bearing) 61 and 62, and a lip seal member 53 attached to an outer peripheral side attaching member (for example, the outer ring) 62 corresponding to the other.

The slinger member 52 is made of a metal material, is formed in an approximately L-shape in cross section by integrally forming an annular radially rising part 52b at one end in an axial direction of a tubular part 52a, and is fitly attached to an outer peripheral surface of the inner peripheral side attaching member (for example, the inner ring) 61 by the tubular part 52a. The lip seal member 53 is structured such that a plurality of seal lips 55 (three lips in the drawing) made of a rubber-like elastic material are attached to a metal ring 54, which also has an approximately L-shaped cross section, and is fitly attached to an inner peripheral surface of the outer peripheral side attaching member (for example, the outer ring) 62 by the metal ring 54.

Further, a peripheral end (an upper end in the drawing) of the radially rising part 52b in the slinger member 52 faces to the lip seal member 53 via a slight radial gap c, whereby here is provided with a labyrinth seal 56 for inhibiting dust, muddy water or the like in an outer portion A from making intrusion into an inner portion B of the sealing device 51.

Since the sealing device 51 having the structure mentioned above is provided with the labyrinth seal 56 inhibiting dust, muddy water or the like from making intrusion between the peripheral end of the radially rising part 52b of the slinger member 52 and the lip seal member 53 facing thereto as mentioned above, it is possible to achieve a certain degree of dust resistance on the basis of a seal effect obtained by the labyrinth seal 56. However, since an axial length of the labyrinth seal 56 is significantly short, there is a disadvantage that its sealing performance is not so high.

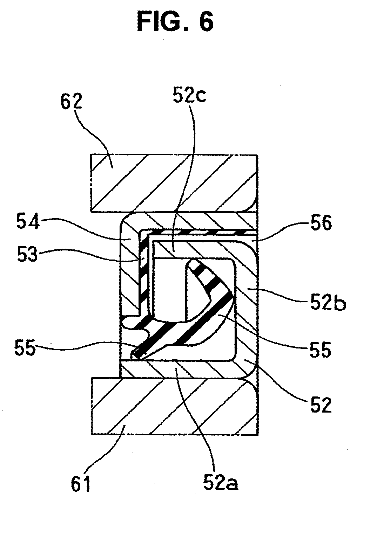

Further, in conventional, as shown in Fig. 6, there has been developed a technique of setting the axial length of the labyrinth seal 56 larger by integrally forming an outer peripheral tube part 52c at an outer peripheral position of the slinger member 52 so as to set a labyrinth space along an overall length of an outer peripheral surface of the outer peripheral tube part 52c. However, since even such the length remains to be insufficient, the sealing performance of the labyrinth seal 56 is yet insufficient (patent document 1).
Patent Document 1: Japanese Unexamined Utility Model Publication No. 3-59562

### SUMMARY OF THE INVENTION

### Problem to be Solved by the Invention

The present invention is made by taking the points mentioned above into consideration, and an object of the present invention is to provide a sealing device in which a sealing performance obtained by a labyrinth seal is further improved in comparison with the conventional art mentioned above, to thereby make it possible to extremely effectively inhibit dust, muddy water or the like from making intrusion.

### Means for Solving the Problem

In order to achieve the object mentioned above, in accordance with a first aspect of the present invention, there is provided a sealing device structured by a combination of an inner peripheral side sealing member attached to an inner peripheral side attaching member corresponding to one of two relatively rotating members, and an outer peripheral side sealing member attached to an outer peripheral side attaching member corresponding to the other of the two members, in which the inner peripheral side sealing member has a metal ring fixed to the inner peripheral side attaching member, and the outer peripheral side sealing member has a metal ring fixed to the outer peripheral side attaching member, and seal lips made of a rubber-like elastic material and attached to the latter metal ring so as to be slidably brought into close contact with the metal ring of the inner peripheral side sealing member, wherein an outer peripheral tube part is provided at an outer peripheral portion of in the metal ring in the inner peripheral side sealing member, and a series of labyrinth spaces is provided between an outer peripheral surface of the outer peripheral tube part and the outer peripheral side sealing member, between a distal end surface of the outer peripheral tube part and the outer peripheral side sealing member and between an inner peripheral surface of the outer peripheral tube part and the outer peripheral side sealing member.

Further, in accordance with a second aspect of the present invention, there is provided a sealing device structured by a combination of an inner peripheral side sealing member attached to an inner peripheral side attaching member corresponding to one of two relatively rotating members, and an outer peripheral side sealing member attached to an outer peripheral side attaching member corresponding to the other of the two members, in which the inner peripheral side sealing member has a metal ring fixed to the inner peripheral side attaching member, and the outer peripheral side sealing member has a metal ring fixed to the outer peripheral side attaching member, and seal lips made of a rubber-like elastic material and attached to the latter metal ring so as to be slidably brought into close contact with the metal ring of the inner peripheral side sealing member, wherein an outer peripheral tube part is provided at an outer peripheral portion of the metal ring in the inner peripheral side sealing member, an inclined surface expanding gradually in diameter from a distal end portion toward a proximal end portion is provided at an outer peripheral surface of the outer peripheral tube part, a corresponding inclined surface is provided at the outer peripheral side sealing member, and a labyrinth space is provided by the inclined surfaces.

Further, in accordance with a third aspect of the present invention, there is provided a sealing device structured by a combination of an outer peripheral side sealing member attached to an outer peripheral side attaching member corresponding to one of two relatively rotating members, and an inner peripheral side sealing member attached to an inner peripheral side attaching member corresponding to the other of the two members, in which the outer peripheral side sealing member is constituted by a metal ring fixed to the outer peripheral side attaching member, and the inner peripheral side sealing member has a metal ring fixed to the inner peripheral side attaching member, and seal lips made of a rubber-like elastic material and attached to the latter metal ring so as to be slidably brought into close contact with the metal ring of the outer peripheral side sealing member, wherein an inner peripheral tube part is provided at an inner peripheral portion of the metal ring in the outer peripheral side sealing member, the inner peripheral tube part is in non-contact with the inner peripheral side sealing member, and a labyrinth spaces are provided between the inner peripheral tube part and the inner peripheral side sealing member.

Further, in accordance with a fourth aspect of the present invention, there is provided a sealing device as recited in the third aspect, wherein labyrinth spaces are provided in series between an outer peripheral surface of the inner peripheral tube part and the inner peripheral side sealing member, between a distal end surface of the inner peripheral tube part and the inner peripheral side sealing member and between an inner peripheral surface of the inner peripheral tube part and the inner peripheral side sealing member.

In the sealing device in accordance with the first aspect of the present invention provided with the structure mentioned above, since the labyrinth space is provided at each of the distal end side and the inner peripheral side, in addition to the outer peripheral side of the outer peripheral tube part provided on the metal ring of the inner peripheral side sealing member, it is possible to set a length of the labyrinth seal obtained by the labyrinth spaces longer than the conventional structure.

Further, in the sealing device in accordance with the second aspect of the present invention provided with the structure mentioned above, since the labyrinth space set at the outer peripheral side of the outer peripheral tube part is not formed in an axially straight shaped,, but is formed in the inclined surface shape (a taper shape or a conical surface shape), it is possible to achieve a seal function (a muddy water push-back operation) on the basis of an operation of centrifugal force at a time when the sealing device is rotated.

Further, in the sealing device in accordance with the third aspect of the present invention provided with the structure mentioned above, since the inner peripheral tube part is provided at the inner peripheral portion of the metal ring in the outer peripheral side sealing member, the inner peripheral tube part is in non-contact with the inner peripheral side sealing member and the labyrinth space is provided between the inner peripheral tube part and the inner peripheral side sealing member, the non-contact type labyrinth seal obtained by the labyrinth space is arranged at a back side of the contact type lip seal obtained by the seal lip, whereby it is possible to reduce a seal load borne by the labyrinth seal. (Since the lip seal is arranged at a front side and the labyrinth seal is arranged at a back side thereof, as seen from the side of dust, muddy water or the like in the outer portion of the sealing device, the lip seal serves as a primary seal, and the labyrinth seal serves as a secondary seal. Accordingly, since the labyrinth seal corresponding to the secondary seal is to seal only the dust leaking from the lip seal corresponding to the primary seal, it is considered that the labyrinth seal can sufficiently seal such a small amount of dust).

Further, as described in the fourth aspect of the present invention, in the case that the labyrinth spaces are provided in series between the outer peripheral surface of the inner peripheral tube part and the inner peripheral side sealing member, between the distal end surface of the inner peripheral tube part and the inner peripheral side sealing member and between the inner peripheral surface of the inner peripheral tube part and the inner peripheral side sealing member, it is possible to set the length of the labyrinth seal longer than the case that the labyrinth seal is provided only between the inner peripheral surface of the inner peripheral tube part and the inner peripheral side sealing member. Since the sealing performance of the labyrinth seal can be increased in correspondence to its length, it is possible to increase the sealing performance.

### Effect of the Invention

The present invention has the following effect.

In the sealing device in accordance with the first aspect of the present invention, since a series of the labyrinth spaces is provided between the outer peripheral surface of the outer peripheral tube part provided on the metal ring of the inner peripheral side sealing member and the outer peripheral side sealing member, between the distal end surface of the outer peripheral tube part and the outer peripheral side sealing member and between the inner peripheral surface of the outer peripheral tube part and the outer peripheral side sealing member, the length of the labyrinth seal obtained by a plurality of the labyrinth spaces is set longer than the conventional structure. Accordingly, it is possible to further improve the sealing performance obtained by the labyrinth, and it is possible to effectively inhibit dust, muddy water or the like from making intrusion.

Further, in the sealing device in accordance with the second aspect of the present invention, since the inclined surface expanding gradually in diameter from the distal end portion toward the proximal end portion is provided at the outer peripheral tube part provided on the metal ring of the inner peripheral side sealing member, the corresponding inclined surface is provided at the outer peripheral side sealing member, and the inclined surface shaped labyrinth space is provided by both the inclined surfaces, the inclined surface shaped labyrinth space achieves the sealing effect by utilizing of centrifugal force in addition to the labyrinth seal effect. Accordingly, it is possible to further improve the sealing performance obtained by the labyrinth, and it is possible to effectively inhibit dust, muddy water or the like from making intrusion.

Further, in the sealing device in accordance with the third aspect of the present invention, since the inner peripheral tube part is provided at the inner peripheral portion of the metal ring in the outer peripheral side sealing member, the inner peripheral tube part is in non-contact with the inner peripheral side sealing member, and the labyrinth spaces are provided between the inner peripheral tube part and the inner peripheral side sealing member, the non-contact type labyrinth seal obtained by the labyrinth spaces is arranged at the back side of the contact type lip seal obtained by the seal lip, whereby it is possible to reduce the seal load borne by the labyrinth seal. Accordingly, in the relationship between the sealing performance of the labyrinth seal and the amount of an object to be sealed, the former sealing performance is relatively increased, whereby it is possible to further improve the sealing performance obtained by the labyrinth, and it is possible to effectively inhibit dust, muddy water or the like from making intrusion.

Further, in the sealing device in accordance with the fourth aspect of the present invention, since the labyrinth spaces are provided in series between the outer peripheral surface of the inner peripheral tube part and the inner peripheral side sealing member, between the distal end surface of the inner peripheral tube part and the inner peripheral side sealing member and between the inner peripheral surface of the inner peripheral tube part and the inner peripheral side sealing member, it is possible to set the length of the labyrinth seal longer, whereby it is possible to further improve the sealing performance.

### BRIEF EXPLANTION OF DRAWINGS

Fig. 1 is a cross sectional view of a main portion of a sealing device in accordance with a first embodiment of the present invention;
Fig. 2 is a cross sectional view of a main portion of a sealing device in accordance with a second embodiment of the present invention;
Fig. 3 is a cross sectional view of a main portion of a sealing device in accordance with a third embodiment of the present invention;
Fig. 4 is a cross sectional view of a main portion of a sealing device in accordance with a fourth embodiment of the present invention;
Fig. 5 is a cross sectional view showing an installed state of a sealing device in accordance with a conventional art; and
Fig. 6 is a cross sectional view of a main portion of a sealing device in accordance with another conventional art.

### Description of Reference Numerals

- 1, 21: sealing device
- 2, 23: inner peripheral side sealing member
- 3, 22: outer peripheral side sealing member
- 4: slinger member (metal ring)
- 4a, 6a, 24a, 26a: tubular part
- 4b, 6b, 24b, 26b: radially rising part
- 4c: outer peripheral tube part
- 4d, 7h: outer peripheral surface
- 5, 25: lip seal member
- 6, 24, 26: metal ring
- 7, 27: rubber-like elastic body
- 7a, 27c: outer peripheral rubber part
- 7b, 27b: end rubber part
- 7c, 27a: inner peripheral rubber part
- 7d, 27d: end surface rubber part
- 7e, 7f, 27e, 27f: seal lip
- 7g, 27g: protruding part
- 7i, 27h: inner peripheral surface
- 8, 9, 10, 12, 28, 29, 31: labyrinth space
- 11, 30: labyrinth seal
- 24c: inner peripheral tube part

### DETAILED DESCRIPTION OF PREFERRED EMBODIMENTS

A description will be next given of embodiments in accordance with the present invention with reference to the accompanying drawings.

### First Embodiment

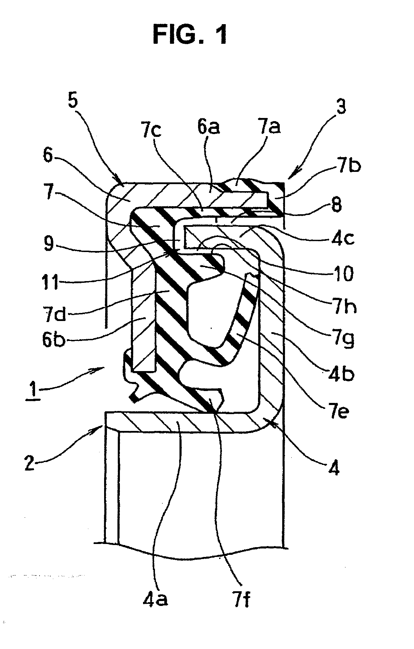

Fig. 1 shows a cross section of a main portion of a sealing device 1 in accordance with a first embodiment of the present invention. The sealing device 1 in accordance with the embodiment is used as a seal for a hub bearing (a hub seal) in an automotive associated field, and is structured as follows. In this case, the embodiment corresponds to an embodiment on the invention in accordance with the first aspect of the present invention.

First, the sealing device 1 has an inner peripheral side sealing member 2 attached to a bearing inner ring (an inner peripheral side attaching member (not shown)) corresponding to one member of two relatively rotating members and rotating together with the bearing inner ring, and an outer peripheral side sealing member 3 attached to a bearing outer ring (an outer peripheral side attaching member (not shown)) corresponding to the other member of the two members and not rotating.

The inner peripheral side sealing member 2 is structured by a slinger member (hereinafter, referred to simply as a slinger) 4 corresponding to one kind of metal ring.

The slinger 4 is made of a metal material such as a sheet metal or the like, and is structured such that an annular radially rising part (a flat surface part) 4b is integrally formed on an end portion at one side (a right side in the drawing) in an axial direction of a tubular part 4a so as to extend outward in a radial direction (upward in the drawing), and is fitly attached to an outer peripheral surface of a bearing inner ring by the former tubular part 4a.

On the other hand, the outer peripheral side sealing member 3 is structured by a lip seal member (hereinafter, referred to simply as a lip seal) 5, and the lip seal 5 is structured by a combination of a metal ring 6, and a rubber-like elastic body 7 attached (adhered in a vulcanizing manner) to the metal ring 6.

The metal ring 6 is made of a metal material such as a sheet metal or the like, is obtained by integrally forming an annular radially rising part (a flat surface part) 6b on an end portion at the other side (a left side of the drawing) in an axial direction of the tubular part 6a so as to extend inward in a radial direction (downward in the drawing), and is fitly attached to an inner peripheral surface of a bearing outer ring by the former tubular part 6a.

The rubber-like elastic body 7 integrally has an outer peripheral rubber part 7a attached to a distal end outer peripheral surface of the tubular part 6a of the metal ring 6, a distal end rubber part 7b attached to a distal end surface of the tubular part 6a, an inner peripheral rubber part 7c attached to an inner peripheral surface of the tubular part 6a, an end surface rubber part 7d attached to an inner side end surface of the radially rising part 6b of the metal ring 6, a seal lip (a side lip) 7e supported by the end surface rubber part 7d and slidably brought into close contact with an inner side end surface of the radially rising part 4b of the slinger 4, and a seal lip (a radial lip) 7f supported by the end surface rubber part 7d in the same manner and slidably brought into close contact with an outer peripheral surface of the attaching part 4a of the slinger 4.

Further, an outer peripheral tube part 4c is integrally formed on a distal end of the radially rising part 4b corresponding to an outermost peripheral portion of the slinger 4 so as to extend toward the other side in the axial direction, whereby the slinger 4 is formed in an approximately C-shaped cross section as a whole.

Further, an annular protruding part 7g is integrally formed on the end surface rubber part 7d of the rubber-like elastic body 7 in the lip seal 5 so as to extend toward one side in an axial direction in such a manner as to be positioned at an inner peripheral side of the outer peripheral tube part 4c, and the protruding part 7g has a tubular outer peripheral surface 7h.

Therefore, in accordance with the structure mentioned above, since labyrinth spaces 8, 9 and 10 each having a small gap are formed between the outer peripheral surface of the outer peripheral tube part 4c and the inner peripheral surface of the inner peripheral rubber part 7c, between the distal end surface of the outer peripheral tube part 4c and the inner side end surface of the end surface rubber part 7d and between the inner peripheral surface of the outer peripheral tube part 4c and the outer peripheral surface 7h of the protruding part 7g, and these labyrinth spaces 8, 9 and 10 at three positions are formed in an approximately C-shaped cross section and are structured in such a manner as to be sequential in series, an overall length of a labyrinth seal 11 obtained by the labyrinth spaces 8, 9 and 10 is set longer than the conventional structure. Accordingly, since the overall length of the labyrinth seal 11 is set longer than the conventional structure as mentioned above, it is possible to further improve a sealing performance generated by the labyrinth seal 11, and it is possible to effectively inhibit dust, muddy water, or the like from making intrusion into the sealing device 1, and into the bearing too.

### Second Embodiment

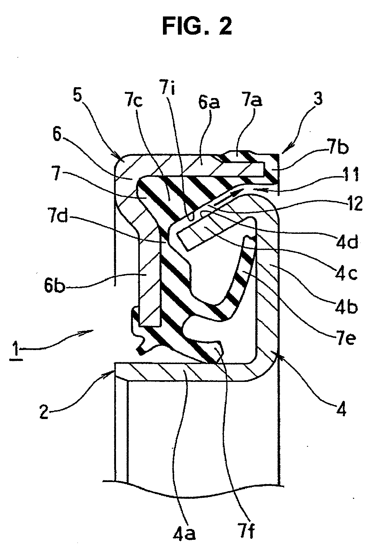

Fig. 2 shows a cross section of a main portion of a sealing device 1 in accordance with a second embodiment of the present invention. The sealing device 1 in accordance with the embodiment is used as a seal for a hub bearing (a hub seal) in an automotive associated field, and is structured as follows. In this case, the embodiment corresponds to an embodiment on the invention in accordance with the second aspect of the present invention.

First, the sealing device 1 has an inner peripheral side sealing member 2 attached to a bearing inner ring (an inner peripheral side attaching member (not shown)) corresponding to one member of two relatively rotating members and rotating together with the bearing inner ring, and an outer peripheral side sealing member 3 attached to a bearing outer ring (an outer peripheral side attaching member (not shown)) corresponding to the other member of the two members and not rotating.

The inner peripheral side sealing member 2 is structured by a slinger member (hereinafter, referred to simply as a slinger) 4 corresponding to one kind of metal ring.

The slinger 4 is made of a metal material such as a sheet metal or the like, and is structured such that an annular radially rising part (a flat surface part) 4b is integrally formed on an end portion at one side (a right side in the drawing) in an axial direction of a tubular part 4a so as to extend outward in a radial direction (upward in the drawing), and is fitly attached to an outer peripheral surface of a bearing inner ring by the former tubular part 4a.

On the other hand, the outer peripheral side sealing member 3 is structured by a lip seal member (hereinafter, referred to simply as a lip seal) 5, and the lip seal 5 is structured by a combination of a metal ring 6, and a rubber-like elastic body 7 attached (adhered in a vulcanizing manner) to the metal ring 6.

The metal ring 6 is made of a metal material such as a sheet metal or the like, is obtained by integrally forming an annular radially rising part (a flat surface part) 6b on an end portion at the other side (a left side of the drawing) in an axial direction of the tubular part 6a so as to extend inward in a radial direction (downward in the drawing), and is fitly attached to an inner peripheral surface of a bearing outer ring by the former tubular part 6a.

The rubber-like elastic body 7 integrally has an outer peripheral rubber part 7a attached to a distal end outer peripheral surface of the tubular part 6a of the metal ring 6, a distal end rubber part 7b attached to a distal end surface of the tubular part 6a, an inner peripheral rubber part 7c attached to an inner peripheral surface of the tubular part 6a, an end surface rubber part 7d attached to an inner side end surface of the radially rising part 6b of the metal ring 6, a seal lip (a side lip) 7e supported by the end surface rubber part 7d and slidably brought into close contact with an inner side end surface of the radially rising part 4b of the slinger 4, and a seal lip (a radial lip) 7f supported by the end surface rubber part 7d in the same manner and slidably brought into close contact with an outer peripheral surface of the attaching part 4a of the slinger 4.

Further, an outer peripheral tube part 4c is integrally formed on a distal end of the radially rising part 4b corresponding to an outermost peripheral portion of the slinger 4 so as to extend toward the other side in the axial direction. In this embodiment, particularly, the outer peripheral tube part 4c is formed in an inclined surface shape (a taper surface shape or a conical surface shape) expanding gradually in diameter from a distal end portion toward a proximal end portion. The expanding direction is a direction expanding from the other side in an axial direction (a left side of the drawing) to one side (a right side of the drawing). Further, in conformity with this, an inner peripheral surface 7i of the inner peripheral rubber part 7c of the rubber-like elastic body 7 in the lip seal member 5 is also formed in an inclined surface shape expanding gradually in diameter from the other side in the axial direction toward one side. Accordingly, an inclined surface shaped labyrinth space 12 expanding gradually in diameter from the other side in the axial direction toward one side is formed between the outer peripheral surface 4d of the outer peripheral tube part 4c and the inner peripheral surface 7i of the inner peripheral rubber part 7c, whereby a labyrinth seal 11 is structured. The inclined surface shaped labyrinth space 12 is structured, for example, such that its length can be set longer in comparison with the axially straight shaped labyrinth space 8 shown in the first embodiment mentioned above.

In the sealing device 1 having the structure mentioned above, when the slinger 4 at the rotating side is rotated at a high speed together with the bearing inner ring, a muddy water push-back function caused by an operation of centrifugal force is achieved within the inclined surface shaped labyrinth space 12. The muddy water making intrusion into the labyrinth space 12 is pushed back in an outward direction (a direction of an arrow) on the basis of the push-back function. Accordingly, since the muddy water push-back effect on the basis of the centrifugal force is achieved in addition to the labyrinth seal effect generated by the labyrinth space 12 mentioned above, it is possible to improve a sealing capacity of the sealing device 1 as the whole, whereby it is possible to effectively inhibit dust, muddy water or the like from making intrusion into the sealing device 1 and into the bearing too.

In this case, a cross sectional shape of the inclined surface shaped labyrinth space 12 maybe formed in a circular arc shape in addition to the inclined straight shape as illustrated.

Further, a projection or a groove may be provided in the outer peripheral tube part 4c or/and the inner peripheral surface 7i of the inner peripheral rubber part 7c. As for a shape of the projection or the groove, it is possible to improve a shaking off effect by employing a shape which is parallel to the axial direction, and it is possible to expect a seal effect on the basis of a pumping operation by employing an inclined shape with respect to the axial direction, or a thread shape by forming a spiral shape.

### Third Embodiment

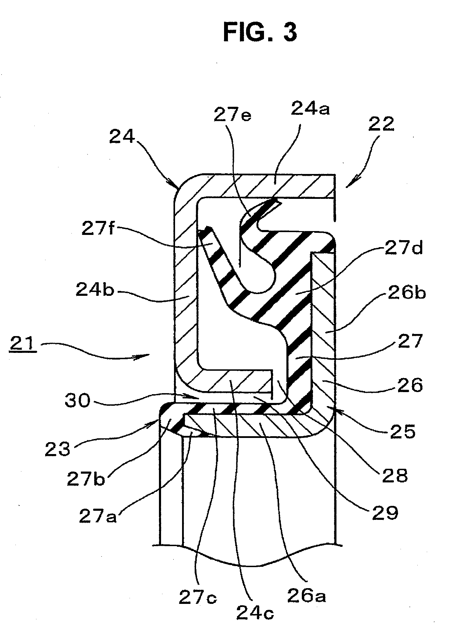

Fig. 3 shows a cross section of a main portion of a sealing device 21 in accordance with a third embodiment of the present invention. The sealing device 21 in accordance with the embodiment is used as a seal for a hub bearing (a hub seal) in an automotive associated field, and is structured as follows. In this case, the embodiment corresponds to an embodiment on the invention in accordance with the third aspect of the present invention.

First, the sealing device 21 has an outer peripheral side sealing member 22 attached to a bearing outer ring (an outer peripheral side attaching member (not shown)) corresponding to one member of two relatively rotating members and not rotating, and an inner peripheral side sealing member 23 attached to a bearing inner ring (an inner peripheral side attaching member (not shown)) corresponding to the other member of the two members and rotating together with the bearing inner ring.

The outer peripheral side sealing member 22 is structured by a single unit of a metal ring 24, and the metal ring 24 is made of a metal material such as a sheet metal or the like, and is structured such that an annular radially rising part (a flat surface part) 24b is integrally formed on an end portion at one side (a left side in the drawing) in an axial direction of a tubular part 24a so as to extend inward in a radial direction (downward in the drawing), and is fitly attached to an inner peripheral surface of a bearing outer ring by the former tubular part 24a.

On the other hand, the inner peripheral side sealing member 23 is structured by a lip seal member (hereinafter, referred to simply as a lip seal) 25, and the lip seal 25 is structured by a combination of a metal ring 26, and a rubber-like elastic body 27 attached (adhered in a vulcanizing manner) to the metal ring 26.

The metal ring 26 is made of a metal material such as a sheet metal or the like, is obtained by integrally forming an annular radially rising part (a flat surface part) 26b on an end portion at the other side (a right side of the drawing) in an axial direction of the tubular part 26a so as to extend outward in a radial direction (upward in the drawing), and is fitly attached to an outer peripheral surface of a bearing inner ring by the former tubular part 26a.

The rubber-like elastic body 27 integrally has an inner peripheral rubber part 27a attached to a distal end inner peripheral surface of the tubular part 26a of the metal ring 26, a distal end rubber part 27b attached to a distal end surface of the tubular part 26a, an outer peripheral rubber part 27c attached to an outer peripheral surface of the tubular part 26a, an end surface rubber part 27d attached to an inner side end surface of the radially rising part 26b of the metal ring 26, a seal lip (a radial lip) 27e supported by the end surface rubber part 27d and slidably brought into close contact with an inner peripheral surface of the tubular part 24a of the metal ring 24 in the outer peripheral side sealing member 22, and a seal lip (a side lip) 27f supported by the end surface rubber part 27d in the same manner and slidably brought into close contact with an inner side end surface of the radially rising part 24b of the metal ring 24 in the outer peripheral side sealing member 22.

Further, an inner peripheral tube part 24c is integrally formed on a distal end of the radially rising part 24b corresponding to an innermost peripheral portion of the metal ring 24 of the outer peripheral side sealing member 22 so as to extend toward one side in an axial direction, whereby the metal ring 24 is formed in an approximately C-shaped cross section as a whole.

The inner peripheral tube part 24c is arranged close to the inner peripheral side sealing member 23 and is structured such as to be in non-contact with the inner peripheral side sealing member 23, labyrinth spaces 28 and 29 each having a small gap are formed between a leading end surface of the inner peripheral tube part 24c and an inner side end surface of the end surface rubber part 27d and between an inner peripheral surface of the inner peripheral tube part 24c and an outer peripheral surface of the outer peripheral rubber part 27c, and the labyrinth spaces 28 and 29 at these two positions are formed in an approximately L-shaped cross section and are structured in such a manner as to be sequent in series, whereby a labyrinth seal 30 is formed in the portion.

In the sealing device 21 having the structure mentioned above, since the inner peripheral tube part 24c is provided at the inner peripheral portion of the metal ring 24 in the outer peripheral side sealing member 22, the inner peripheral tube part 24c is in non-contact with the inner peripheral side sealing member 23 and the labyrinth spaces 28 and 29 are provided between the inner peripheral tube part 24c and the inner peripheral side sealing member 23, the contact type labyrinth seal 30 generated by the labyrinth spaces 28 and 29 is arranged at a back side of the non-contact type lip seal generated by the seal lips 27e and 27f, and it is possible to substantially reduce a seal load borne by the labyrinth seal 30. Accordingly, in a relationship between a sealing performance of the labyrinth seal 30 and an amount of an object to be sealed, since the former sealing performance is relatively increased, it is possible to further improve the sealing performance by the labyrinth, and it is possible to effectively inhibit dust, muddy water or the like from making intrusion.

Further, since the labyrinth spaces 28 and 29 are provided at two positions between the distal end surface of the inner peripheral tube part 24c and the inner side end surface of the end surface rubber part 27d and between the inner peripheral surface of the inner peripheral tube part 24c and the outer peripheral surface of the outer peripheral rubber part 27c, and the labyrinth spaces 28 and 29 at two positions are formed in the approximately L-shaped cross section and are structured such as to be sequent in series, an overall length of the labyrinth seal 30 generated by the labyrinth spaces 28 and 29 is set longer than the conventional structure. Accordingly, since the overall length of the labyrinth seal 30 is set longer than the conventional structure as mentioned above, it is possible to further improve the sealing performance obtained by the labyrinth seal 30, and it is possible to effectively inhibit dust, muddy water or the like frommaking intrusion into the sealing device 21, and into the bearing too.

### Fourth Embodiment

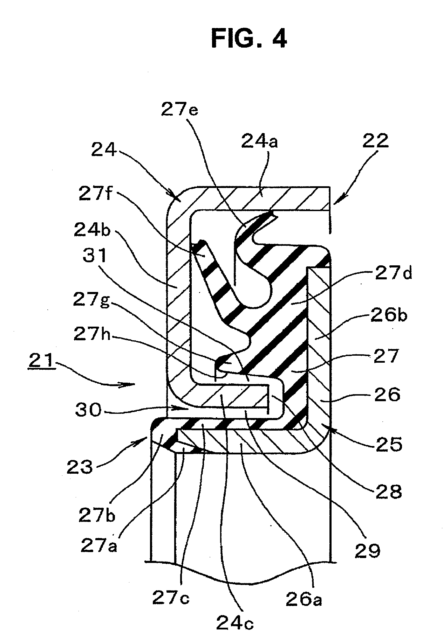

Fig. 4 shows a cross section of a main portion of a sealing device 21 in accordance with a fourth embodiment of the present invention. The sealing device 21 in accordance with the embodiment is used as a seal for a hub bearing (a hub seal) in an automotive associated field, and is structured as follows. In this case, the embodiment corresponds to an embodiment on the invention in accordance with the fourth aspect of the present invention.

First, the sealing device 21 has an outer peripheral side sealing member 22 attached to a bearing outer ring (an outer peripheral side attaching member (not shown)) corresponding to one member of two relatively rotating members and not rotating, and an inner peripheral side sealing member 23 attached to a bearing inner ring (an inner peripheral side attaching member (not shown)) corresponding to the other member of the two members and rotating together with the bearing inner ring.

The outer peripheral side sealing member 22 is structured by a single unit of a metal ring 24, and the metal ring 24 is made of a metal material such as a sheet metal or the like, and is structured such that an annular radially rising part (a flat surface part) 24b is integrally formed on an end portion at one side (a left side in the drawing) in an axial direction of a tubular part 24a so as to extend inward in a radial direction (downward in the drawing), and is fitly attached to an inner peripheral surface of a bearing outer ring by the former tubular part 24a.

On the other hand, the inner peripheral side sealing member 23 is structured by a lip seal member (hereinafter, referred to simply as a lip seal) 25, and the lip seal 25 is structured by a combination of a metal ring 26, and a rubber-like elastic body 27 attached (adhered in a vulcanizing manner) to the metal ring 26.

The metal ring 26 is made of a metal material such as a sheet metal or the like, is obtained by integrally forming an annular radially rising part (a flat surface part) 26b on an end portion at the other side (a right side of the drawing) in an axial direction of the tubular part 26a so as to extend outward in a radial direction (upward in the drawing), and is fitly attached to an outer peripheral surface of a bearing inner ring by the former tubular part 26a.

The rubber-like elastic body 27 integrally has an inner peripheral rubber part 27a attached to a distal end inner peripheral surface of the tubular part 26a of the metal ring 26, a distal end rubber part 27b attached to a distal end surface of the tubular part 26a, an outer peripheral rubber part 27c attached to an outer peripheral surface of the tubular part 26a, an end surface rubber part 27d attached to an inner side end surface of the radially rising part 26b of the metal ring 26, a seal lip (a radial lip) 27e supported by the end surface rubber part 27d and slidably brought into close contact with an inner peripheral surface of the tubular part 24a of the metal ring 24 in the outer peripheral side sealing member 22, and a seal lip (a side lip) 27f supported by the end surface rubber part 27d in the same manner and slidably brought into close contact with an inner side end surface of the radially rising part 24b of the metal ring 24 in the outer peripheral side sealing member 22.

Further, an inner peripheral tube part 24c is integrally formed on a distal end of the radially rising part 24b corresponding to an innermost peripheral portion of the metal ring 24 in the outer peripheral side sealing member 22 so as to extend toward one side in an axial direction, whereby the metal ring 24 is formed in an approximately C-shaped cross section as a whole.

Further, an annular protruding part 27g is integrally formed on an end surface rubber part 27d of a rubber-like elastic body 27 in the lip seal 25 so as to extend toward one side in an axial direction, in such a manner as to be positioned at an outer peripheral side of the inner peripheral tube part 24c, and the protruding part 27g has a tubular inner peripheral surface 27h.

Therefore, in accordance with the structure mentioned above, since the labyrinth spaces 28, 29 and 31 each having a small gap are formed between the outer peripheral surface of the inner peripheral tube part 24c and the inner peripheral surface 27h of the protruding part 27g, between the distal end surface of the inner peripheral tube part 24c and the inner side end surface of the end surface rubber part 27d and between the inner peripheral surface of the inner peripheral tube part 24c and the outer peripheral surface of the outer peripheral rubber part 27c, and the labyrinth spaces 28, 29 and 31 at these three positions are formed in an approximately C-shaped cross section and are structured such as to be sequent in series, an overall length of a labyrinth seal 30 generated by the labyrinth spaces 28, 29 and 31 is set further longer than the case of the third embodiment mentioned above, in addition to the same operations and effects as achieved in the third embodiment mentioned above. Therefore, it is possible to further increase the sealing performance in accordance that the length of the labyrinth seal 30 is set longer as mentioned above.

## Claims

1. A sealing device (1) structured by a combination of an inner peripheral side sealing member (2) attached to an inner peripheral side attaching member corresponding to one of two relatively rotating members, and an outer peripheral side sealing member (3) attached to an outer peripheral side attaching member corresponding to the other of said two members, in which said inner peripheral side sealing member (2) has a metal ring (4) fixed to said inner peripheral side attaching member, and said outer peripheral side sealing member (3) has a metal ring (6) fixed to said outer peripheral side attaching member, and seal lips (7e, 7f) made of a rubber-like elastic material and attached to said metal ring (6) so as to be slidably brought into close contact with the metal ring (4) of said inner peripheral side sealing member (2),
wherein an outer peripheral tube part (4c) is provided at an outer peripheral portion of the metal ring (4) in said inner peripheral side sealing member (2), and
wherein a series of labyrinth spaces (8, 9, 10) is provided between an outer peripheral surface of said outer peripheral tube part (4c) and said outer peripheral side sealing member (3), between a distal end surface of said outer peripheral tube part (4c) and said outer peripheral side sealing member (3) and between an inner peripheral surface of said outer peripheral tube part (4c) and said outer peripheral side sealing member (3).

2. A sealing device (1) structured by a combination of an inner peripheral side sealing member (2) attached to an inner peripheral side attaching member corresponding to one of two relatively rotating members, and an outer peripheral side sealing member (3) attached to an outer peripheral side attaching member corresponding to the other of said two members, in which said inner peripheral side sealing member (2) has a metal ring (4) fixed to said inner peripheral side attaching member, and said outer peripheral side sealing member (3) has a metal ring (6) fixed to said outer peripheral side attaching member, and seal lips (7e, 7f) made of a rubber-like elastic material and attached to said metal ring (6) so as to be slidably brought into close contact with the metal ring (4) of said inner peripheral side sealing member (2),
wherein an outer peripheral tube part (4c) is provided at an outer peripheral portion of the metal ring (4) in said inner peripheral side sealing member (2), and
wherein an inclined surface expanding gradually in diameter from a distal end portion toward a proximal end portion is provided at an outer peripheral surface (4d) of said outer peripheral tube part (4c), a corresponding inclined surface is provided at said outer peripheral side sealing member (3), and a labyrinth space (12) is provided by said inclined surfaces.

3. A sealing device (21) structured by a combination of an outerperipheral side sealingmember (22) attached to an outer peripheral side attaching member corresponding to one of two relatively rotating members, and an inner peripheral side sealing member (23) attached to an inner peripheral side attaching member corresponding to the other of said two members, in which said outer peripheral side sealing member (22) is constituted by a metal ring (24) fixed to said outer peripheral side attaching member, and said inner peripheral side sealing member (23) has a metal ring (26) fixed to said inner peripheral side attaching member, and seal lips (27e, 27f) made of a rubber-like elastic material and attached to said metal ring (26) so as to be slidably brought into close contact with the metal ring (24) of said outer peripheral side sealing member (22),
wherein an inner peripheral tube part (24c) is provided at an inner peripheral portion of the metal ring (24) in said outer peripheral side sealing member (22), and
wherein said inner peripheral tube part (24c) is in non-contact with said inner peripheral side sealing member (23), and labyrinth spaces (28, 29) are provided between said inner peripheral tube part (24c) and said inner peripheral side sealing member (23).

4. A sealing device as claimed in claim 3, wherein labyrinth spaces (28, 29, 31) are provided in series between an outer peripheral surface of the inner peripheral tube part (24c) and the inner peripheral side sealing member (23), between a distal end surface of said inner peripheral tube part (24c) and said inner peripheral side sealingmember (23) and between an inner peripheral surface of said inner peripheral tube part (24c) and said inner peripheral side sealing member (23) .
